# EUROPÄISCHE PATENTSCHRIFT

(11) **EP 1 676 795 B1**
(45) Veröffentlichungstag und Bekanntmachung des Hinweises auf die Patenterteilung: **17.01.2007**
(21) Anmeldenummer: 05016931.7
(22) Anmeldetag: 04.08.2005
(51) Int. Cl.: B65G 53/46

(54) **Zellenrad-Schleuse mit beheizbarem Gehäuse**
Cellular wheel sluice with heatable casing
Écluse a roue cellulaire avec un boîtier réchauffable

(30) Priorität: 23.12.2004 DE 102004063429
(43) Veröffentlichungstag der Anmeldung: 05.07.2006
(73) Patentinhaber: Coperion Waeschle GmbH & Co. KG, 88250 Weingarten (DE)
(72) Erfinder: Zinser, Bruno, 88289 Waldburg (DE); Huber, Enver, 88250 Weingarten (DE); Reich, Lorenz, 88250 Weingarten (DE)
(74) Vertreter: Rau, Manfred

(56) Entgegenhaltungen:
- EP-A- 1 074 492
- DE-A1- 10 143 850
- DE-B- 1 255 038
- SU-A1- 662 133
- US-A- 5 765 728

## Beschreibung

Die Erfindung betrifft eine Zellenrad-Schleuse nach dem Oberbegriff des Anspruches 1.

Eine derartige Zellenrad-Schleuse ist aus der EP 1 074 492 A1 (entspr. US 6,237,816 B1) bekannt. Bei dieser bekannten Zellenrad-Schleuse sind Mittel zur Messung des Abstandes zwischen Zellenrad und Innenwand des Gehäuses vorgesehen. Außerdem sind das Zellenrad und/oder die Innenwand des Gehäuses in Abhängigkeit vom Messwert radial verformbar. Diese radiale Verformung des Gehäuses wird u. a. durch ein örtliches oder ein voll umfängliches Temperieren, also Beheizen oder Kühlen, des Zellenrades und/oder des Gehäuses bewirkt. Hierzu ist als eine Möglichkeit eine doppelwandige Ausgestaltung des Gehäuses, also ein Aufbau des Gehäuses aus Innenwand und Außenwand, vorgesehen, wobei durch die hierdurch gebildeten Kammern temperiertes Öl geleitet wird. Diese Kammern erstrecken sich jeweils über beide seitlichen Längsbereiche zwischen dem Einlass-Stutzen und dem Auslass-Stutzen.

Insbesondere große Zellenrad-Schleusen, beispielsweise solche ab einem Zellenrad-Durchmesser von 480 mm, weisen das Grundproblem auf, dass nur sehr schwer die erforderliche Steifigkeit des Gehäuses erreichbar ist. Dies liegt zum Teil daran, dass die Gehäuse einem nicht unwesentlichen Druck von Seiten der Förderleitung ausgesetzt werden. Hinzu kommt, dass insbesondere bei Einsatz offener Zellenräder, also solcher Zellenräder, die an ihren Stirnseiten keine Abschlussplatten aufweisen, während des Betriebes ein Verzug der Deckel auftritt, wodurch ein Klemmen bzw. Anlaufen der Flügel der Zellenräder am Deckel bzw. an der Innenwand des Gehäuses stattfinden kann. Dies gilt insbesondere für Austrags-Schleusen mit beheizten Gehäusen, wobei dieser Effekt insbesondere während des Aufheizvorganges eintritt. Dieser Verzug kann wiederum nur dadurch verhindert werden, dass die Spalte zwischen Flügeln und Innenwand bzw. Deckel von vorneherein relativ groß gemacht werden mit den daraus resultierenden Nachteilen.

Aus der SU 662 133 A1 ist eine Zellenradschleuse mit einem durch eine Innenwand und eine Außenwand begrenzten Gehäuse bekannt, wobei zwischen der Innenwand und der Außenwand Kammern gebildet sind, in die ein Temperier-Mittel-Zuführ-Anschluss einmündet und aus der ein Temperier-Mittel-Abführ-Anschluss ausmündet. Die Kammern umschließen im Bereich der Stirnseiten des Gehäuses den Einlass-Stutzen. Das Gehäuse besitzt keine hohe Steifigkeit und ist auch gegen einen Verzug im Bereich der Deckel nicht gesichert.

Der Erfindung liegt die Aufgabe zugrunde, eine Zellenrad-Schleuse der gattungsgemäßen Art so auszugestalten, dass das Gehäuse eine hohe Steifigkeit aufweist und ein Verzug insbesondere im Bereich der Deckel unterbunden wird.

Diese Aufgabe wird erfindungsgemäß durch die Merkmale im Kennzeichnungsteil des Anspruches 1 gelöst. Dadurch, dass Innenwand und Außenwand auf jeder Seite durch mehrere Rippen miteinander verbunden sind und dass die durch die Innenwand und die Außenwand begrenzten Kammern den Einlass-Stutzen und den Auslass-Stutzen jeweils im Bereich der Stirnseiten des Gehäuses umgeben, wird einerseits eine extrem hohe Steifigkeit des Gehäuses erreicht und zum anderen auch eine Rundum-Beheizbarkeit ermöglicht. Auch wenn das Gehäuse nicht beheizbar sein soll, tritt eine Verbesserung der Steifigkeit ein, weil zumindest über einen wesentlichen Teil der Stirnseiten das Gehäuse auch im Bereich von Einlass-Stutzen und Auslass-Stutzen doppelwandig ausgebildet ist. Im Übrigen tritt eine weitgehend gleichmäßige Temperierung der Gehäuse im Bereich der Stirnseiten ein, wodurch die geschilderten Verzugs-Erscheinungen eliminiert werden. Die Ansprüche 2 und 3 geben hierzu vorteilhafte Ausgestaltungen an, wobei insbesondere die Ausgestaltung nach Anspruch 2 von großem Vorteil ist.

Die Unteransprüche 4 bis 11 geben weitere vorteilhafte Ausgestaltungen wieder.

Weitere Vorteile, Merkmale und Einzelheiten der Erfindung ergeben sich aus der nachfolgenden Beschreibung von Ausführungsbeispielen an Hand der Zeichnung. Es zeigt
- Fig. 1: ein erstes Ausführungsbeispiel einer Zellenrad-Schleuse in einer teilweise aufgebrochenen Seitendarstellung,
- Fig. 2: eine Stirnansicht der Zellenrad-Schleuse gemäß der Schnittlinie II-II in Fig. 1,
- Fig. 3: eine Einzelheit III in gegenüber Fig. 2 vergrößerter Darstellung,
- Fig. 4: das Gehäuse der Zellenrad-Schleuse in teilweise aufgebrochener perspektivischer Darstellung,
- Fig. 5: eine Stirnansicht des Gehäuses eines zweiten Ausführungsbeispiels der Erfindung,
- Fig. 6: eine Stirnansicht eines Gehäuses eines dritten Ausführungsbeispiels der Erfindung,
- Fig. 7: eine Stirnansicht eines Gehäuses eines vierten Ausführungsbeispiels der Erfindung,
- Fig. 8: ein fünftes Ausführungsbeispiel einer Zellenrad-Schleuse in einer teilweise aufgebrochenen Seitendarstellung,
- Fig. 9: eine Stirnansicht der Zellenrad-Schleuse gemäß der Schnittlinie IX-IX in Fig. 8,
- Fig. 10: eine Einzelheit X in gegenüber Fig. 9 vergrößerter Darstellung,
- Fig. 11: das Gehäuse der Zellenrad-Schleuse in teilweise aufgebrochener perspektivischer Darstellung und
- Fig. 12: eine Seitenansicht des Gehäuses eines sechsten Ausführungsbeispiels der Erfindung.

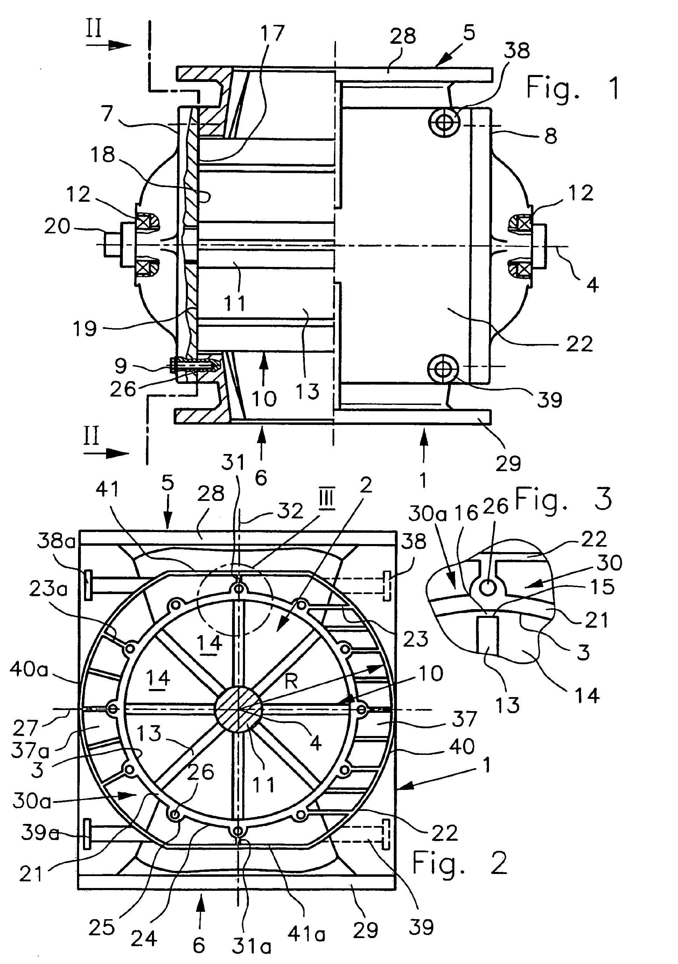

Die in den Fig. 1 bis 4 dargestellte Zellenrad-Schleuse weist ein Gehäuse 1 mit einem im Wesentlichen zylindrischen Innenraum 2 auf, der durch eine entsprechende zylindrische Innenwand-Fläche 3 begrenzt wird. Der Innenraum 2 weist eine horizontale Mittel-Achse 4 auf. In den Innenraum 2 mündet von oben ein Einlass-Stutzen 5 ein und unten ein Auslass-Stutzen 6 aus. Der Innenraum 2 des Gehäuses 1 ist an seinen Stirnseiten offen ausgebildet. Diese Stirnseiten werden durch Deckel 7, 8 abgedeckt, die mittels nur angedeuteter Schrauben 9 am Gehäuse 1 befestigt sind. Im Innenraum 2 ist konzentrisch zur Mittel-Achse 4 ein Zellenrad 10 angeordnet, dessen Welle 11 in Lagern 12 gelagert ist, die in den Deckeln 7, 8 angeordnet sind.

An der Welle 11 sind radial zur Mittel-Achse 4 von ihr abstehende, durch rechteckige Platten gebildete Flügel 13 angebracht. Diese Flügel 13 sind in üblicher Weise in gleichen Winkelabständen über den Umfang der Welle 11 verteilt. Jeweils benachbarte Flügel 13 begrenzen zwischen sich eine Zelle 14. Die Flügel 13 lassen zwischen ihrer radial außen liegenden, parallel zur Achse 4 verlaufenden Längskante 15 und der Innenwand-Fläche 3 des Gehäuses 1 nur einen kleinen konstruktionsbedingten Radial-Spalt 16 frei. Zwischen den radial verlaufenden Seitenkanten 17 der Flügel 13 und der ebenen zugewandten Gegenfläche 18 des Deckels 7 bzw. 8 ist ebenfalls ein konstruktionsbedingt notwendiger, radial verlaufender Axial-Spalt 19 ausgebildet, der ebenfalls sehr klein und deshalb in der Zeichnung nicht erkennbar ist. Die Zellen 14 sind zu den Gegenflächen 18 der Deckel 7, 8 hin offen, d. h. in den Zellen 14 sind keine sich radial zur Mittel-Achse 4 erstreckenden, benachbarte Flügel 13 miteinander verbindenden Seitenscheiben angeordnet. Der Drehantrieb des Zellenrades 10 erfolgt mittels eines nicht dargestellten Motors, der über einen einseitig von der Welle 11 vorragenden Kupplungs-Zapfen 20 mit der Welle 11 gekoppelt wird.

Wie aus Fig. 2 bis 4 hervorgeht, ist das Gehäuse 1 doppelwandig ausgebildet. Es weist eine den Innenraum 2 mit der Innenwand-Fläche 3 begrenzende Innenwand 21 und eine hierzu radial zur Mittel-Achse 4 beabstandete Außenwand 22 auf. Die Innenwand 21 und die Außenwand 22 sind durch in Längsrichtung des Gehäuses 1, also parallel zur Mittel-Achse 4, verlaufende, in gleichen Winkelabständen angeordnete flache Rippen 23, 23a miteinander verbunden, die unter anderem zur Aussteifung des Gehäuses 1 dienen. Diese Rippen 23, 23a können auf vielerlei Art ausgestaltet sein.

Bei dem Ausführungsbeispiel nach den Fig. 1 bis 4 sind auf der Außenseite 24 der Innenwand 21 Vorsprünge 25 mit Gewindebohrungen 26 zur Aufnahme der Schrauben 9 ausgebildet. Flache Rippen 23a können sich radial zur Mittel-Achse 4 oder flache Rippen 23 können sich parallel zueinander zur Außenwand 22 des Gehäuses 1 erstrecken. Die parallel zueinander verlaufenden flachen Rippen 23 verlaufen parallel zu der - in der Zeichnung horizontalen - Mittel-Längs-Ebene 27 des Gehäuses 1, die parallel zu den Flanschen 28, 29 der Stutzen 5 bzw. 6 verläuft. Selbstverständlich wird in einem konkreten Gehäuse 1 nur eine Art der Rippen 23 oder 23a ausgebildet sein. In Fig. 2 sind lediglich aus Gründen der zeichnerischen Vereinfachung beide Arten von Rippen 23 bzw. 23a dargestellt. Die Gehäuse 1 bestehend aus Innenwand 21, Außenwand 22 und Rippen 23 bzw. 23a sind einstückig als Guss-Körper ausgebildet, sind also echte Verbund-Körper.

Die Innenwand 21 und die Außenwand 22 umschließen zwei Kammern 30, 30a, die wiederum von den Rippen 23 bzw. 23a unterteilt werden. Die beiden Kammern 30, 30a sind durch kleine Trenn-Wände 31, 31a voneinander getrennt. Die Breite der Trenn-Wände 31, 31 kann größer sein als in der Zeichnung dargestellt. Dies wird insbesondere dann der Fall sein, wenn das Gehäuse 1 aus Aluminium-Guss besteht. Die beiden Kammern 30, 30a werden in jedem Fall den Einlass-Stutzen 5 und den Auslass-Stutzen 6 im Wesentlichen umschließen. Diese Trenn-Wände 31, 31a liegen in einer Mittel-Längs-Ebene 32, die durch die Mittel-Achse 4 geht und die senkrecht durch die Flansche 28, 29 und die horizontale Mittel-Längs-Ebene 27 verläuft. Die Trenn-Wände 31, 31a liegen in Richtung der Achse 4 auf beiden Seiten des Einlass-Stutzens 5 bzw. des Auslass-Stutzens 6. Die beiden Kammern 30, 30a sind also nicht miteinander verbunden. Wie aus Fig. 2 bis 4 hervorgeht, umschließen die Kammern 30, 30a sowohl den Einlass-Stutzen 5 als auch den Auslass-Stutzen 6 weitgehend, und zwar sowohl in Längsrichtung des Gehäuses 1 als auch parallel zu den Stirnseiten 33.

Die Stirnseiten 33, 34 des Gehäuses 1 sind bei dem Guss-Körper mit relativ großen, sich jeweils über den größten Teil des Umfangs einer Kammer 30 bzw. 30a erstreckenden Bereichen offen ausgebildet, also mit Öffnungen 35 versehen. Lediglich im Bereich des Einlass-Stutzens 5 und des Auslass-Stutzens 6 sind die Stirnseiten 33 bereits beim Guss-Körper mittels der Trenn-Wände 31, 31a geschlossen ausgebildet. Die Öffnungen 35 werden nach der Fertigstellung des Gehäuses mit eingesetzten Verschlussplatten 36 dicht verschlossen. Wenn das Gehäuse 1 nicht für Heiz-Betrieb eingesetzt werden soll, müssen die Öffnungen 35 naturgemäß nicht verschlossen werden.

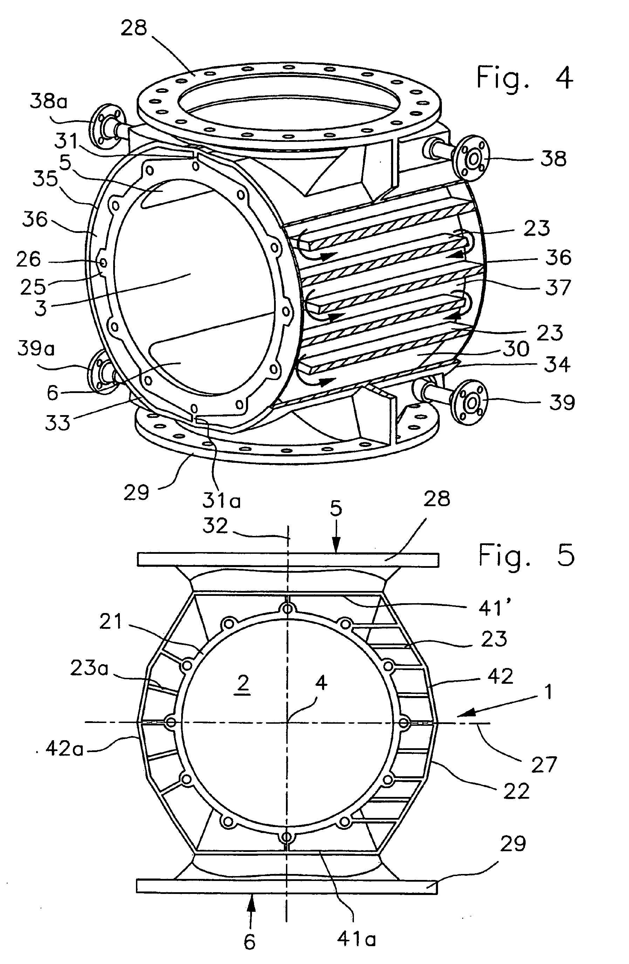

Die Rippen 23, 23a erstrecken sich nicht über die volle Länge des Gehäuses 1, sondern sind abwechselnd gegenüber der in Fig. 4 vorderen Stirnseite 33 bzw. der hinteren Stirnseite 34 zurückversetzt, sodass in jeder Kammer 30 bzw. 30a ein mäanderförmig verlaufender Temperier-Kanal 37, 37a gebildet wird. Dieser mäanderförmig verlaufende Temperier-Kanal 37, 37a ist an seinem Anfang und an seinem Ende jeweils mit einem Temperier-Mittel-Zuführ-Anschluss 38 bzw. 38a und einem Temperier-Mittel-Abführ-Anschluss 39 bzw. 39a versehen, durch den das Temperier-Mittel zugeführt bzw. abgeführt wird.

Die Außenwand 22 des Gehäuses 1 kann unterschiedliche Querschnitte aufweisen, wie aus den Fig. 2 und 5, 6 und 7 hervorgeht. Bei der Ausgestaltung nach den Fig. 1 bis 4 wird die Außenwand 22 jeweils im Bereich zwischen Einlass-Stutzen 5 und Auslass-Stutzen 6 durch Teil-Zylinder-Flächen 40, 40a und unmittelbar benachbart zum jeweiligen Flansch 28 bzw. 29 durch eine zum jeweiligen Flansch 28, 29 parallel verlaufende ebene Fläche 41, 41a begrenzt. Der Radius R dieser Teil-Zylinder-Flächen 40 beginnt in der Mittel-Achse 4; diese Teil-Zylinder-Flächen 40, 40a verlaufen also konzentrisch zur Mittel-Achse 4.

Bei der Ausbildung nach Fig. 5 wird die Außenwand 22' des Gehäuses 1' wiederum im Bereich parallel zu den Flanschen 28, 29 durch ebene Flächen 41', 41'a begrenzt. Im Bereich jeweils zwischen den Flanschen 28, 29 sind Teil-Polygon-Flächen 42, 42a vorgesehen.

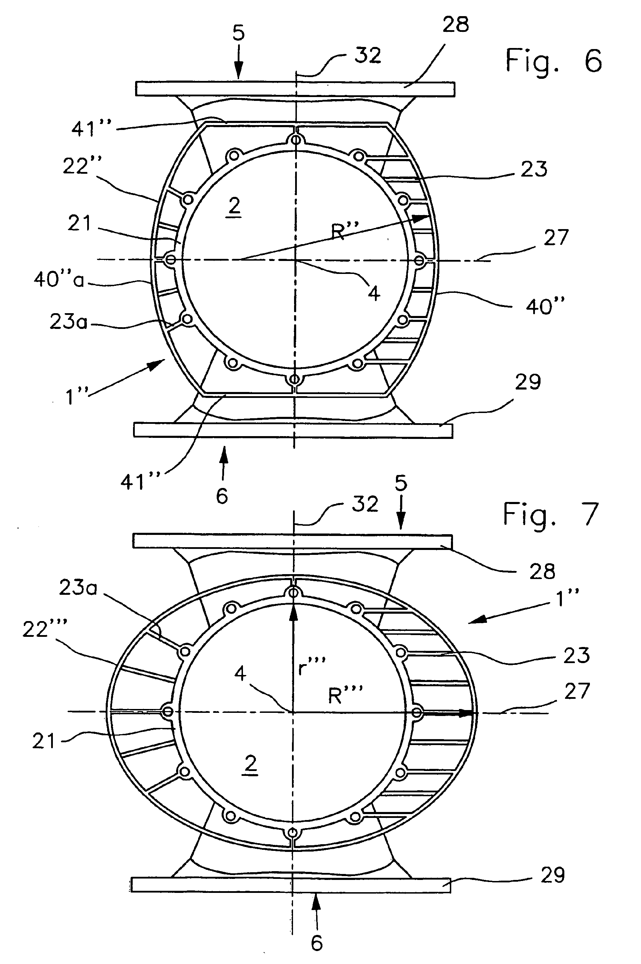

Bei der Ausgestaltung des Gehäuses 1" nach Fig. 6 sind wiederum benachbart zu den Flanschen 28, 29 ebene Flächen 41", 41"a, vorgesehen, die im Bereich jeweils zwischen den Flanschen 28 bzw. 29 durch Teil-Zylinder-Flächen 40", 40"a miteinander verbunden sind, deren Radius R" nicht in der Mittel-Achse 4 beginnt, sondern deutlich größer ist als der Radius R der Ausgestaltung nach den Fig. 1 bis 4. Der Abstand der Außenwand 22" von der Innenwand 21 vergrößert sich also jeweils ausgehend von der Mittel-Längs-Ebene 27 zu den Flanschen 28 bzw. 29 hin, wie aus Fig. 6 hervorgeht.

Bei dem Gehäuse 1"' nach Fig. 7 weist die Außenwand 22"' einen elliptischen Querschnitt auf, wobei der große Radius R"' in der horizontalen Mittel-Längs-Ebene 27 liegt, während der kleine Radius r"' in der vertikalen Mittel-Längs-Ebene 32 liegt.

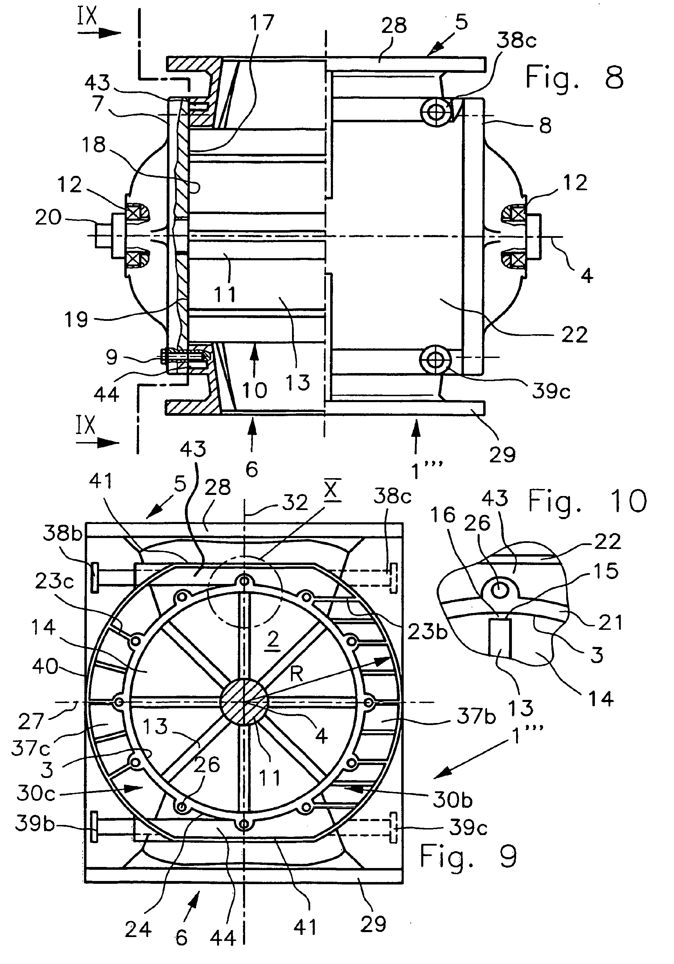

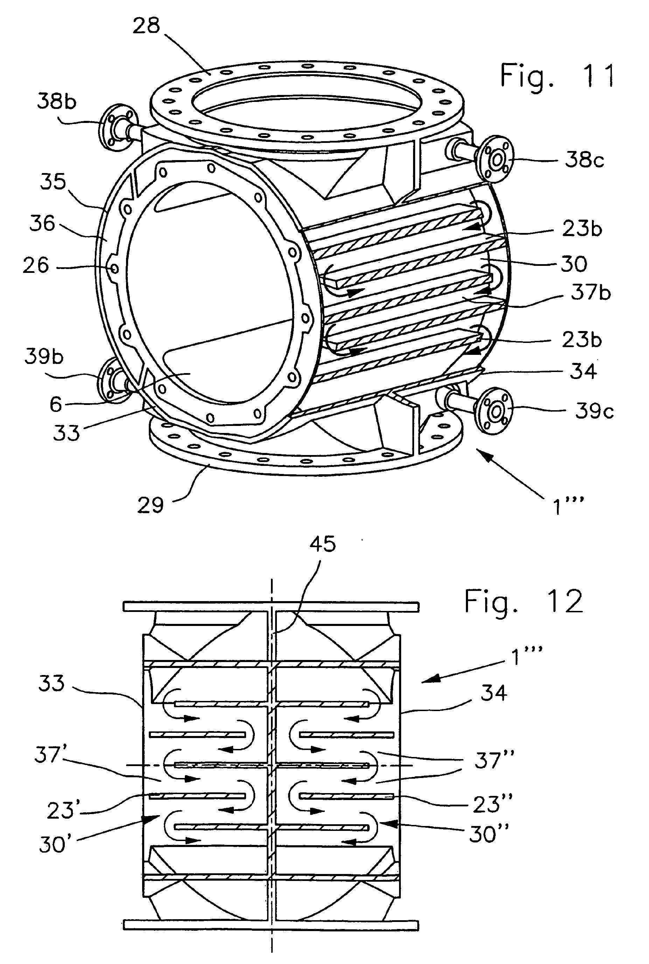

Das Ausführungsbeispiel nach den Fig. 8 bis 11 unterscheidet sich von dem nach den Fig. 1 bis 4 dahingehend, dass die Trenn-Wände 31, 31a fortgelassen sind. Die auf einer Seite des Gehäuses 1"" befindlichen Temperier-Mittel-Zuführ-Anschlüsse 38b bzw. 38c sind mit der gegenüber liegenden Kammer 30b bzw. 30c verbunden. Entsprechend sind die zu einer Kammer 30b und 30c gehörenden Temperier-Mittel-Abführ-Anschlüsse 39b bzw. 39c auf der gegenüber liegenden Seite angeordnet, auf der auch jeweils der Zuführ-Anschluss 30b bzw. 30c angeordnet ist. Der Temperier-Mittel-Zuführ-Anschluss 38b ist über einen den Einlass-Stutzen 5 im Bereich der vorderen Stirnseite 33 teilweise umschließenden Zuström-Kanal 43 mit dem Temperier-Kanal 37b der gegenüber liegenden Kammer 30b verbunden. Am unteren Ende des Temperier-Kanals 37b ist dieser wiederum durch einen Abström-Kanal 44 mit dem gegenüber liegenden Temperier-Mittel-Abführ-Anschluss 39b verbunden, der also den Auslass-Stutzen 6 im Bereich der vorderen Stirnseite 33 des Gehäuses 1"" teilweise umschließt. Damit die Durchströmung der Kammer 30b in der geschilderten Weise erfolgt, sind die Rippen 23b in umgekehrter Reihenfolge abwechselnd gegeneinander versetzt angeordnet wie bei dem Ausführungsbeispiel nach den Fig. 1 bis 4. Entsprechendes gilt für die im Bereich der hinteren Stirnseite 34 angeordneten Anschlüsse 38c und 39c, die mit der gegenüber liegenden Kammer 30c entsprechend verbunden sind. Auch in der gegenüber liegenden Kammer 30c sind die Rippen 23c jeweils derart abwechselnd versetzt gegeneinander angeordnet, dass das durch den Zuführ-Anschluss 38c zugeführte Temperier-Mittel in der gegenüber liegenden Kammer 30c mäanderförmig nach unten und dann zum gegenüber liegenden Abführ-Anschluss 39c fließt.

Während bei den bisher beschriebenen Ausführungsbeispielen die Temperier-Kanäle 37, 37b sich jeweils im Wesentlichen über die volle Länge des Gehäuses 1, 1'. 1", 1"', 1"" in Richtung der Mittel-Achse 4 erstrecken, kann bei dem Gehäuse 1""' gemäß der Darstellung in Fig. 12 auch vorgesehen sein, Aussteifungs-Stege 45 in einer Radial-Ebene zur Mittel-Achse 4 auf der halben Gehäuselänge vorzusehen, die die erwähnten Kammern unterteilen, sodass zwischen den Aussteifungs-Stegen 45 und der einen Stirnseite 33 eine Kammer 30' und zwischen dem Aussteifungs-Steg 45 und der anderen Stirnseite 34 eine Kammer 30" gebildet wird, in der sich die Rippen 23' bzw. 23" nur über knapp die halbe Gehäuselänge erstrecken und so dort mäanderförmige Temperier-Kanäle 37' bzw. 37" begrenzen.

## Patentansprüche

1. Zellenrad-Schleuse
- mit einem Gehäuse (1,1',1",1"',1"",1""'), das
-- einen durch eine im Wesentlichen zylindrische Innenwand (21) begrenzten Innenraum (2),
-- einen oberen, in den Innenraum (2) mündenden Einlass-Stutzen (5),
-- einen unteren, aus dem Innenraum (2) ausmündenden Auslass-Stutzen (6),
-- eine Mittel-Achse (4),
-- den Innenraum (2) begrenzende Stirnseiten (33, 34),
-- eine die Innenwand (21) mit Abstand umgebende Außenwand (22, 22', 22", 22"'),
-- die Innenwand (21) und die Außenwand (22, 22', 22", 22"') miteinander verbindende Rippen (23, 23a, 23b, 23c, 23', 23") und
-- zwischen der Innenwand (21) und der Außenwand (22, 22', 22", 22"') ausgebildete, sich zwischen Einlass-Stutzen (5) und Auslass-Stutzen (6) parallel zur Mittel-Achse (4) erstreckende, jeweils mit einem Temperier-Mittel-Zuführ-Anschluss (38, 38a, 38b, 38c) und einem Temperier-Mittel-Abführ-Anschluss (39, 39a, 39b, 39c) verbundene Kammern (30, 30a, 30b, 30c, 30', 30")
aufweist,
- mit die Stirnseiten abschließenden Deckeln (7, 8),
-- die am Gehäuse (1, 1', 1", 1"', 1"", 1""') angebracht sind, und
-- die konzentrisch zur Mittel-Achse (4) Lager (12) aufweisen, und
- mit einem Zellenrad (10),
-- das konzentrisch zur Mittel-Achse (4) angeordnet ist,
-- das die Lager (12) durchsetzend drehbar gelagert ist, und
-- das Flügel (13) aufweist, die sich
--- radial zur Mittel-Achse (4) bis in die Nähe der Innenwand (21) und
--- in Richtung der Mittel-Achse (4) bis in die Nähe der Deckel (7, 8)
erstrecken,
**dadurch gekennzeichnet,**
**dass** die Kammern (30, 30a, 30b, 30c, 30', 30") im Bereich der Stirnseiten (33, 34) des Gehäuses (1) den Einlass-Stutzen (5) und den Auslass-Stutzen (6) umschließen und
**dass** die Rippen (23, 23a, 23b, 23c, 23', 23") mäanderförmig verlaufende Temperier-Kanäle (37, 37a, 37b, 37c, 37', 37") begrenzen.

2. Zellenrad-Schleuse nach Anspruch 1, **dadurch gekennzeichnet,**
**dass** der einer Kammer (30b, 30c) zugeordnete Temperier-Mittel-Zuführ-Anschluss (38b, 38c) und der dieser Kammer (30b, 30c) zugeordnete Temperier-Mittel-Abführ-Anschluss (39b, 39c) auf der der Kammer (30b, 30c) gegenüber liegenden Seite des Gehäuses (1"") angeordnet und mit der Kammer (30b, 30c) jeweils über einen den Einlass-Stutzen (5) teilweise umschließenden Zuström-Kanal (43) und einen den Auslass-Stutzen (6) teilweise umschließenden Abström-Kanal (44) verbunden ist.

3. Zellenrad-Schleuse nach Anspruch 1, **dadurch gekennzeichnet,**
**dass** die Kammern (30, 30a) im Bereich des Einlass-Stutzens (5) und des Auslass-Stutzens (6) mittels Trenn-Wänden (31, 31a) voneinander getrennt sind.

4. Zellenrad-Schleuse nach einem der Ansprüche 1 bis 3, **dadurch gekennzeichnet,**
**dass** die Rippen (23a, 23c) radial zur Mittel-Achse (4) verlaufen.

5. Zellenrad-Schleuse nach einem der Ansprüche 1 bis 3, **dadurch gekennzeichnet,**
**dass** die Rippen (23, 23b) zwischen Einlass-Stutzen (5) und Auslass-Stutzen (6) parallel zueinander verlaufen.

6. Zellenrad-Schleuse nach einem der Ansprüche 1 bis 5, **dadurch gekennzeichnet,**
**dass** die Außenwand (22, 22', 22") des Gehäuses (1, 1', 1") im Bereich von Einlass-Stutzen (5) und Auslass-Stutzen (6) durch ebene Flächen (41, 4 1 a, 41', 41'a, 41", 41"a) begrenzt wird.

7. Zellenrad-Schleuse nach einem der Ansprüche 1 bis 6, **dadurch gekennzeichnet,**
**dass** die Außenwand (22, 22', 22") des Gehäuses (1, 1', 1") im Bereich zwischen Einlass-Stutzen (5) und Auslass-Stutzen (6) durch Teil-Zylinder-Flächen (40, 40a, 40", 40"a) gebildet wird.

8. Zellenrad-Schleuse nach einem der Ansprüche 1 bis 6, **dadurch gekennzeichnet,**
**dass** die Außenwand (22') des Gehäuses (1") zwischen dem Einlass-Stutzen (5) und dem Auslass-Stutzen (6) durch Teil-Polygon-Flächen (42, 42a) gebildet wird.

9. Zellenrad-Schleuse nach einem der Ansprüche 1 bis 5, **dadurch gekennzeichnet,**
**dass** die Außenwand (22"') des Gehäuses (1"') elliptischen Querschnitt aufweist.

10. Zellenrad-Schleuse nach einem der Ansprüche 1 bis 9, **dadurch gekennzeichnet,**
**dass** das Gehäuse (1, 1', 1", 1"', 1"", 1""'), bestehend aus Innenwand (21), Außenwand (22, 22', 22", 22"') und Rippen (23, 23a, 23b, 23c) als einstückiger Guss-Körper ausgebildet ist.

11. Zellenrad-Schleuse nach einem der Ansprüche 1 bis 10, **dadurch gekennzeichnet,**
**dass** jeweils im Bereich zwischen dem Einlass-Stutzen (5) und dem Auslass-Stutzen (6) mindestens drei Rippen (23, 23a, 23b, 23c) vorgesehen sind.

## Claims

1. Cell wheel sluice
-- with a casing (1, 1', 1", 1"', 1"", 1""') which has
-- an internal space (2) delimited by a substantially cylindrical internal wall (21),
-- an upper inlet connector (5) opening into the internal space (2),
-- a lower outlet connector (6) emerging from the internal space (2),
-- a centre axis (4),
-- end faces (33, 34) delimiting the internal space (2),
-- an external wall (22, 22', 22", 22"') enclosing the internal wall (21) at a distance,
-- ribs (23, 23a, 23b, 23c, 23', 23") connecting the internal wall (21) and the external wall (22, 22', 22", 22"')
and
-- chambers (30, 30a, 30b, 30c, 30', 30") formed between the internal wall (21) and the external wall (22, 22', 22", 22"'), extending between inlet connector (5) and outlet connector (6) parallel to the centre axis (4), and connected to a tempering agent delivery connection (38, 38a, 38b, 38c) and a tempering agent discharge connection (39, 39a, 39b, 39c) respectively,
-- with covers (7, 8) closing the end faces
-- which are attached to the casing (1, 1', 1", 1"', 1"", 1"'"),
and have bearings (12) concentric to the centre axis (4), and with a cellular wheel (10)
-- which is arranged concentrically to the centre axis (4),
-- which is mounted rotatably penetrating the bearings (12), and
-- which has vanes (13) which
--- extend radially to the centre axis (4) until in proximity to the internal wall (21) and in the direction of the centre axis (4) until in proximity of the covers (7, 8),
**characterised in that** the chambers (30, 30a, 30b, 30c, 30', 30") in the region of the end faces (33, 34) of casing (1) enclose inlet connector (5) and outlet connector (6) and **in that** the ribs (23, 23a, 23b, 23c, 23', 23") delimit meandering tempering channels (37, 37a, 37b, 37c, 37', 37").

2. Cell wheel sluice according to claim 1, **characterised in that** the tempering agent delivery connection (38b, 38c) allocated to a chamber (30b, 30c) and the tempering agent discharge connection (39b, 39c) allocated to this chamber (30b, 30c) are arranged on the side of casing (1"") opposing chamber (30b, 30c) and are connected to the chamber (30b, 30c) respectively via a delivery channel (43) partially enclosing the inlet connector (5) and an outlet channel (44) partially enclosing the outlet connector (6).

3. Cell wheel sluice according to claim 1, **characterised in that** chambers (30, 30a) in the region of the inlet connector (5) and the outlet connector (6) are separated from one another by means of partition walls (31, 31a).

4. Cell wheel sluice according to any one of claims 1 to 3, **characterised in that** ribs (23a, 23c) are disposed radially to the centre axis (4).

5. Cell wheel sluice according to any one of claims 1 to 3, **characterised in that** ribs (23, 23b) are disposed in parallel between inlet connector (5) and outlet connector (6).

6. Cell wheel sluice according to any one of claims 1 to 5, **characterised in that** the external wall (22, 22', 22") of casing (1, 1', 1") in the region of inlet connector (5) and outlet connector (6) is delimited by flat surfaces (41, 41a, 41', 41'a, 41", 41"a).

7. Cell wheel sluice according to any one of claims 1 to 6, **characterised in that** the external wall (22, 22', 22") of casing (1, 1', 1") in the region between inlet connector (5) and outlet connector (6) is formed by means of part-cylindrical surfaces (40, 40a, 40", 40"a).

8. Cell wheel sluice according to any one of claims 1 to 6, **characterised in that** the external wall (22') of casing (1") is formed between the inlet connector (5) and the outlet connector (6) by means of part-polygonal surfaces (42, 42a).

9. Cell wheel sluice according to any one of claims 1 to 5, **characterised in that** the external wall (22"') of casing (1"') has an elliptical cross-section.

10. Cell wheel sluice according to any one of claims 1 to 9, **characterised in that** the casing (1, 1', 1", 1"', 1"", 1""') consisting of internal wall (21), external wall (22, 22', 22", 22"') and ribs (23, 23a, 23b, 23c) is a one-piece cast element.

11. Cell wheel sluice according to any one of claims 1 to 10, **characterised in that** in the region between the inlet connector (5) and the outlet connector (6) at least three ribs (23, 23a, 23b, 23c) are provided.

## Revendications

1. Écluse à roue cellulaire
- avec un boîtier (1, 1', 1", 1"', 1"", 1""') qui présente
-- un espace intérieur (2) limité par une paroi intérieure (21) essentiellement cylindrique,
-- un embout d'entrée supérieur (5) débouchant dans l'espace intérieur (2),
-- un embout de sortie inférieur (6) sortant de l'espace intérieur (2),
-- un axe médian (4),
-- des faces frontales (33, 34) limitant l'espace intérieur (2),
-- une paroi extérieure (22, 22', 22", 22"') entourant à distance la paroi intérieure (21),
-- des ailettes (23, 23a, 23b, 23c, 23', 23") reliant l'une à l'autre la paroi intérieure (21) et la paroi extérieure (22, 22', 22', 22"'), et
-- des compartiments (30, 30a, 30b, 30c, 30', 30") formés entre la paroi intérieure (21) et la paroi extérieure (22, 22', 22', 22"'), s'étendant parallèlement à l'axe médian (4) entre l'embout d'entrée (5) et l'embout de sortie (6), à chaque fois reliés à un raccord d'alimentation de moyen de mise à température (38, 38a, 38b, 38c) et à un raccord d'évacuation de moyen de mise à température (39, 39a, 39b, 39c),
- avec des éléments de recouvrement (7, 8) obturant les faces frontales,
-- qui sont fixés au boîtier (1, 1', 1", 1"', 1"", 1""'), et
-- qui, concentriquement à l'axe médian (4), présentent des paliers (12), et
- avec une roue cellulaire (10),
-- qui est disposée concentriquement à l'axe médian (4),
-- qui est logée de façon à pouvoir pivoter en traversant les paliers (12), et
-- qui présente des pales (13), qui s'étendent
--- radialement à l'axe médian (4) jusqu'à proximité de la paroi intérieure (21) et
--- en direction de l'axe médian (4) jusqu'à proximité des éléments de recouvrement (7, 8),
**caractérisée en ce que**
les compartiments (30, 30a, 30b, 30c, 30', 30") entourent l'embout d'entrée (5) et l'embout de sortie (6) dans la zone des faces frontales (33, 34) du boîtier (1) et
les ailettes (23, 23a, 23b, 23c, 23', 23") délimitent des canaux de mise à température (37, 37a, 37b, 37c, 37', 37") en forme de méandre.

2. Écluse à roue cellulaire selon la revendication 1, **caractérisée en ce que** le raccord d'alimentation de moyen de mise à température (38b, 38c) affecté au compartiment (30b, 30c) et le raccord d'évacuation de moyen de mise à température (39b, 39c) affecté à ce compartiment (30b, 30c) sont disposés sur le côté du boîtier (1"") opposé au compartiment (30b, 30c) et sont reliés au compartiment (30b, 30c) respectivement par un canal de flux entrant (43) entourant partiellement l'embout d'entrée (5) et par un canal de flux sortant (44) entourant partiellement l'embout de sortie (6).

3. Écluse à roue cellulaire selon la revendication 1, **caractérisée en ce que** les compartiments (30, 30a) sont séparés par des parois de séparation (31, 31a) dans la zone de l'embout d'entrée (5) et de l'embout de sortie (6).

4. Écluse à roue cellulaire selon l'une quelconque des revendications 1 à 3, **caractérisée en ce que** les ailettes (23a, 23c) s'étendent radialement à l'axe médian (4).

5. Écluse à roue cellulaire selon l'une quelconque des revendications 1 à 3, **caractérisée en ce que** les ailettes (23, 23b) s'étendent parallèlement l'une à l'autre entre l'embout d'entrée (5) et l'embout de sortie (6).

6. Écluse à roue cellulaire selon l'une quelconque des revendications 1 à 5, **caractérisée en ce que** la paroi extérieure (22, 22', 22") du boîtier (1, 1', 1") est délimitée par des surfaces planes (41, 41a, 41', 41'a, 41", 41"a) dans la zone de l'embout d'entrée (5) et de l'embout de sortie (6).

7. Écluse à roue cellulaire selon l'une quelconque des revendications 1 à 6, **caractérisée en ce que** la paroi extérieure (22, 22', 22") du boîtier (1, 1', 1") est formée par des surfaces cylindriques partielles (40, 40a, 40", 40"a) dans la zone entre l'embout d'entrée (5) et l'embout de sortie (6).

8. Écluse à roue cellulaire selon l'une quelconque des revendications 1 à 6, **caractérisée en ce que** la paroi extérieure (22') du boîtier (1") est formée par des surfaces polygonales partielles (42, 42a) entre l'embout d'entrée (5) et l'embout de sortie (6).

9. Écluse à roue cellulaire selon l'une quelconque des revendications 1 à 5, **caractérisée en ce que** la paroi extérieure (22"') du boîtier (1"') présente une section elliptique.

10. Écluse à roue cellulaire selon l'une quelconque des revendications 1 à 9, **caractérisée en ce que** le boîtier (1, 1', 1", 1"', 1"", 1""') comprenant une paroi intérieure (21), une paroi extérieure (22, 22', 22", 22"') et des ailettes (23, 23a, 23b, 23c) est conçu sous forme de corps en fonte monobloc.

11. Écluse à roue cellulaire selon l'une quelconque des revendications 1 à 10, **caractérisée en ce qu'**au moins trois ailettes (23, 23a, 23b, 23c) sont à chaque fois prévues dans la zone entre l'embout d'entrée (5) et l'embout de sortie (6).
